# EUROPÄISCHE PATENTSCHRIFT

(11) **EP 2 325 776 B1**
(45) Veröffentlichungstag und Bekanntmachung des Hinweises auf die Patenterteilung: **21.12.2011**
(21) Anmeldenummer: 09014561.6
(22) Anmeldetag: 23.11.2009
(51) Int. Cl.: G06K 5/00, G06K 7/10, G06K 9/00

(54) **Vorrichtung zur Qualitätsprüfung von Barcodes, insbesondere 2D Matrix-Codes**
Device for quality testing barcodes, in particular 2D matrix codes
Dispositif de contrôle qualité de code-barres, notamment de codes à matrice 2D

(43) Veröffentlichungstag der Anmeldung: 25.05.2011
(73) Patentinhaber: Compar AG, 8808 Pfäffikon SZ (CH)
(72) Erfinder: Grossmann, Johann, 8633 Wolfshausen (CH); Eichmann, Marco, 8640 Rapperswil (CH)
(74) Vertreter: Schaad, Balass, Menzl & Partner AG

(56) Entgegenhaltungen:
- WO-A-2008/027410
- US-B2- 7 529 409

## Beschreibung

Die vorliegende Erfindung betrifft eine Vorrichtung zur Prüfung der Qualität eines an einem Gegenstand angebrachten Codes gemäss dem Oberbegriff des Patentanspruchs 1.

Eine Vorrichtung dieser Art ist aus dem Dokument US 7,529,409 B2 bekannt. Mit ihr wird ein Verfahren zur Prüfung der Qualität eines 2D Matrix-Codes durchgeführt. Ein mit dem Matrix-Code versehener Artikel wird auf eine Auflage abgelegt, oberhalb welcher eine in vertikaler Richtung verstellbare Kamera angeordnet ist. Der mittels Lichtquellen gleichmässig ausgeleuchtete Matrix-Code wird von der Kamera aufgenommen und das aufgenommene Bild wird an einen Computer übertragen und an einem Bildschirm dargestellt. Der Computer erzeugt am Bildschirm eine 2D (zweidimensionale) Orientierungshilfe mit parallelen und beabstandeten rechtwinkligen Führungslinien. Der Artikel wird von Hand derart orientiert, dass der Matrix-Code mit der Orientierungshilfe fluchtet. Ist der Matrix-Code mit der Orientierungshilfe auf +- 5° ausgerichtet, kann ein Bild des Matrix-Codes zur Auswertung mittels des Computers verwendet werden. Anschliessend erzeugt der Computer am Bildschirm eine entsprechende um 72° nach links gedrehte Orientierungshilfe, anhand welcher der Matrix-Code von Hand neu auszurichten ist, um ein weiteres Bild zur Auswertung aufzunehmen. Dies wird wiederholt, bis aufgrund von fünf unterschiedlichen Aufnahmen ein Gesamtwert für die Code-Qualität ermittelbar ist. Diese Vorrichtung erfordert zeitaufwändige, genaue Handarbeit zum Ausrichten des Artikels für jede Aufnahme sowie eine Höhenverstellung der Kamera in Abhängigkeit von der Höhe des Artikels.

Es ist eine Aufgabe der vorliegenden Erfindung, eine gattungsgemässe Vorrichtung zu schaffen, welche mit wesentlich geringerem Arbeitsaufwand bedienbar ist.

Diese Aufgabe wird mit einer Vorrichtung gelöst, welche die Merkmale des Patentanspruchs 1 aufweist.

Ein Drehteller mit einem mittigen Sichtbereich bildet die Auflage für den Gegenstand. Der Gegenstand wird mit dem Code nach unten auf den Drehteller abgelegt und die Bildaufnahme des Codes erfolgt von unten. Dadurch ist einerseits der Abstand zwischen Kamera und Gegenstand bzw. Code immer derselbe, was keine optischen Einstellungen für unterschiedliche Gegenstände nötig macht, und können andererseits die unterschiedlichen Orientierungen (Drehlagen) durch entsprechendes Drehen des Drehtellers erreicht werden, ohne dass der Gegenstand relativ zum Drehteller bewegt werden muss.

Bevorzugt wird der Gegenstand beim Ablegen auf den Drehteller derart positioniert, dass die optische Achse vorzugsweise wenigstens annähernd mittig durch den Code hindurch verläuft. Dies und das Positionieren des Gegenstandes in der richtigen Drehlage wird vorzugsweise durch ein Live-Bild der Kamera unterstützt.

Eine besonders bevorzugte Ausführungsform der erfindungsgemässen Vorrichtung ist im Anspruch 3 angegeben. Dadurch kann automatisch die Aufnahme eines Bildes des Codes ausgelöst werden, wenn eine vorbestimmte Orientierung erreicht wird oder diese durchlaufen wird. Entsprechendes gilt für die weitere bevorzugte Ausführungsform der erfindungsgemässen Vorrichtung gemäss Anspruch 4.

Eine optimale Ausleuchtung des Sichtbereiches und somit des Aufnahmefeldes für den Code wird mit einer bevorzugten Ausführungsform der Vorrichtung gemäss Anspruch 5 erzielt.

Eine weitere besonders bevorzugte Ausführungsform der erfindungsgemässen Vorrichtung ist in Anspruch 6 angegeben. Die Kamera schaut über einen Spiegel auf den Sichtbereich und somit den Code. Dadurch wird einerseits eine kleine Baugrösse und andererseits eine verbesserte Fremdlichtabschirmung erzielt.

In einer weiteren bevorzugten Ausführungsform weist die erfindungsgemässe Vorrichtung einen Niederhalter gemäss Anspruch 8 auf. Damit kann der beim Ablegen auf den Drehteller in die gewünschte Lage gebrachte Gegenstand relativ zum Drehteller festgehalten werden, was die Handhabung der Vorrichtung für die Bildaufnahmen stark vereinfacht.

Weitere bevorzugte Ausführungsformen der erfindungsgemässen Vorrichtung sind in den weiteren abhängigen Ansprüchen angegeben.

Die erfindungsgemässe Vorrichtung wird anhand eines in der Zeichnung dargestellten Ausführungsbeispiels näher erläutert.

Es zeigen rein schematisch:

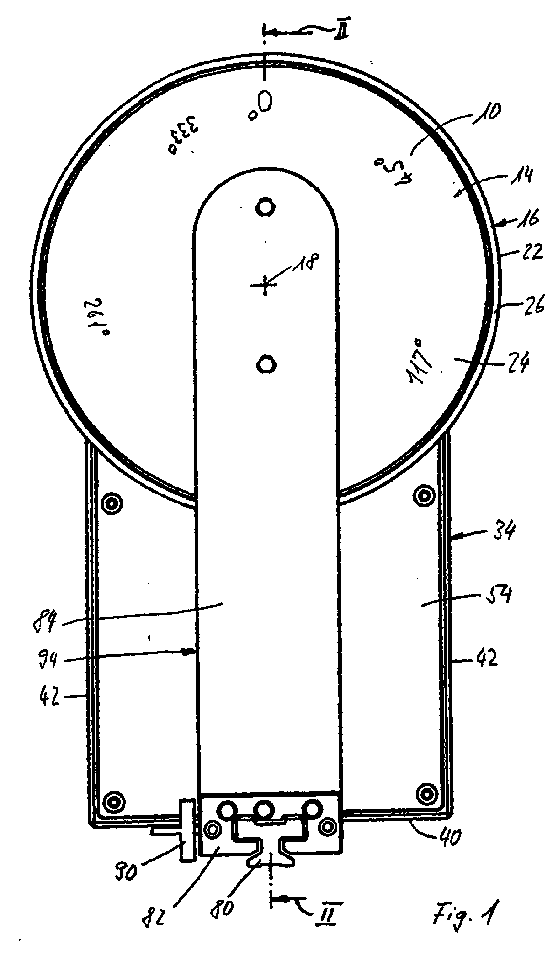

- Fig. 1: in Draufsicht eine erfindungsgemässe Vorrichtung;

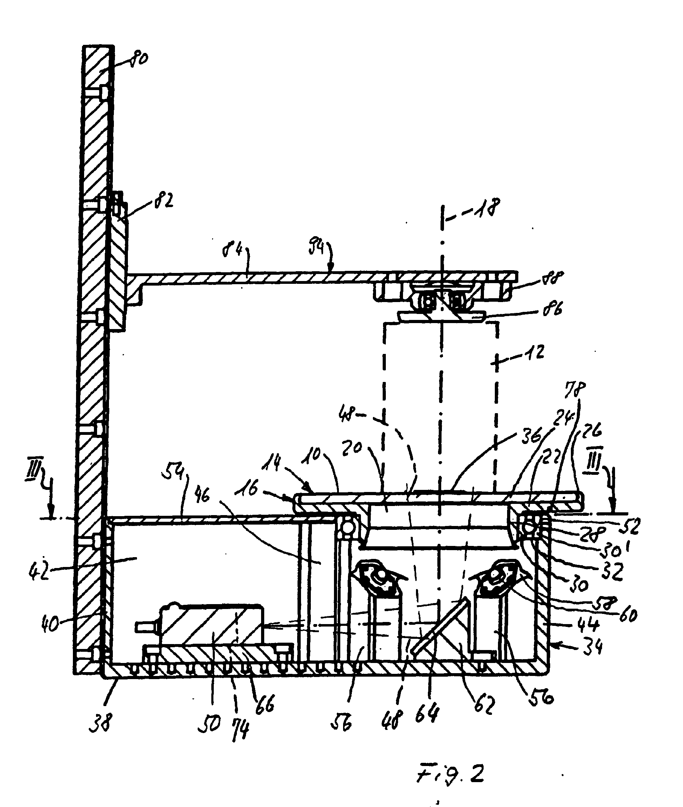

- Fig. 2: in einem Vertikalschnitt entlang der Linie II-II der Fig. 1 die dort gezeigte Vorrichtung; und

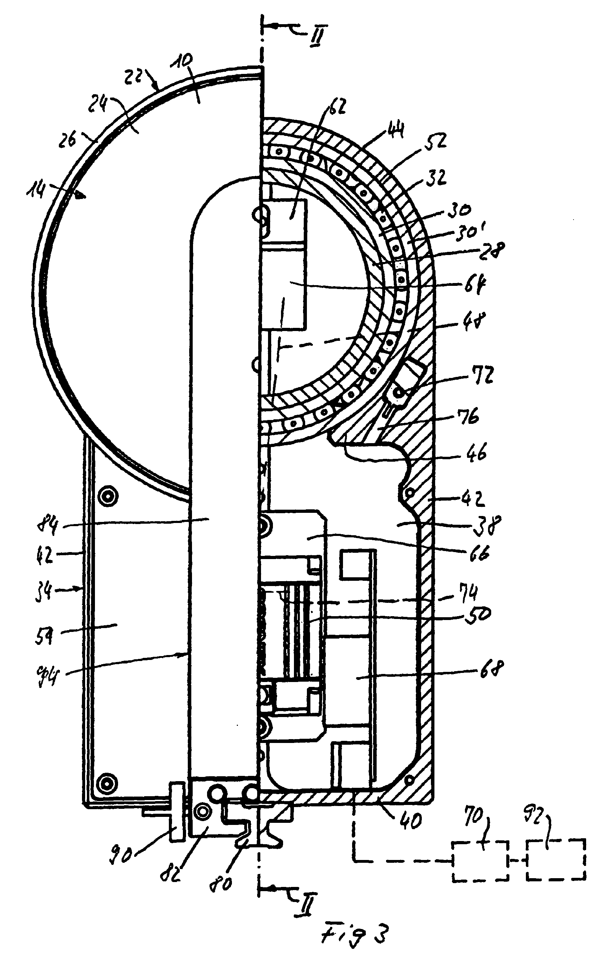

- Fig. 3: die Vorrichtung gemäss Fig. 1 und 2 links in Draufsicht und rechts in einem Horizontalschnitt entlang der Linie III-III der Fig. 2.

Bei der in den Figuren gezeigten Ausführungsform der erfindungsgemässen Vorrichtung ist eine Auflagefläche 10 für einen Gegenstand 12 bildende Auflage 14 von einem Drehteller 16 gebildet. Die Auflagefläche 10 liegt in einer Horizontalebene und die Symmetrieachse des Drehtellers 16 fällt mit einer in vertikaler Richtung verlaufenden optischen Achse 18 zusammen. Der Drehteller 16 ist somit um die optische Achse 18 drehbar. In einem mittigen, zur optischen Achse 18 konzentrischen Sichtbereich 20 ist der Drehteller 16 durchsichtig ausgebildet. Im gezeigten Ausführungsbeispiel wird dies dadurch erzielt, dass der Drehteller 16 einen um den Sichtbereich 20 herum verlaufenden Tellerring 22 aufweist, auf welchem eine die Auflagefläche 10 bildende kreisscheibenförmige Glasplatte 24 angeordnet ist.

Der Tellerring 22 weist radial aussen einen umlaufenden, in Richtung gegen oben, hier bis zur Auflagefläche 10 vorstehenden Randwulst 26 auf, welcher die Glasplatte 24 umgreift und diese am Verschieben in radialer Richtung hindert. Weiter weist der Tellerring 22 radial innen einen in Richtung gegen unten abstehenden Ringflansch 28 auf, auf welchem der Innenring 30 eines Kugellagers 32 sitzt. Der Aussenring 30' des Kugellagers 30 ist in einem Gehäuse 34 gehalten.

Der Tellerring 22 ist vorzugsweise einstückig ausgebildet und aus Metall, beispielsweise Aluminium, gefertigt.

Der Gegenstand 12, im gezeigten Ausführungsbeispiel eine Schachtel, ist mit einem allgemein bekannten 2D (zweidimensional) Matrix-Code 36 versehen. Dieser kann direkt auf den Gegenstand 12 aufgedruckt sein oder er kann sich auf einem auf den Gegenstand 12 aufgeklebten Etikette befinden. Der Gegenstand 12 ist derart auf die Auflagefläche 10 abgelegt, dass der Matrix-Code 36 auf der Auflagefläche 10 aufliegt und die optische Achse 18 mittig durch den Matrix-Code 36 hindurch verläuft. Beim Gegenstand 12 kann es sich jedoch auch beispielsweise um einen mit dem Matrix-Code 36 versehenen Zuschnitt, einen Beipackzettel oder dergleichen handeln.

Das Gehäuse 34 weist einen Boden 38, eine ebene Rückwand 40, zwei an diese anschliessende, einander gegenüber liegende und zur Rückwand 40 rechtwinklig verlaufende Seitenwände 42 sowie eine die beiden Seitenwände 42, der Rückwand 38 gegenüber liegend, miteinander verbindende, halbkreiszylinderförmige Frontwand 44 auf.

Weiter sind die beiden Seitenwände 42, vom Übergang an die Frontwand 44 her, in Richtung zur Rückwand 40, bis etwa zum diesseitigen Ende des Kugellagers 32 mit je einer in vertikaler Richtung verlaufenden Rippe 46 versehen. Zwischen den beiden Rippen 46 bleibt jedoch ausreichend Freiraum für den Strahlengang 48 einer im Innern des Gehäuses 44 angeordneten Kamera 50.

Die Frontwand 44 und die beiden Rippen 46 sind mit einer zur optischen Achse 18 koaxialen, in Umfangsrichtung verlaufenden Ausnehmung 52 versehen. In diese ist das Kugellager 32 mit seinem Aussenring 30' eingesetzt, welcher in axialer Richtung gesehen auf einer von der Ausnehmung 52 gebildeten Schulter und umfangsseitig an der Frontwand 44 und an den Rippen 46 anliegt und dort festgehalten ist.

Im Übrigen ist das Gehäuse 34 vom Kugellager 32 bis zur Rückwand 40 mittels eines abnehmbaren Deckels 54 verschlossen.

Weiter weisen die beiden Rippen 46 auf ihrer der Frontwand 44 zugewandten Seite je einen und weist die Frontwand 44 auf ihrer den Rippen 46 zugewandten Seite zwei rippenartige Vorsprünge 56 auf. Dieser Vorsprünge 56 enden in einem Abstand zum Ringflansch 28 des Tellerrings 22 und ihre oben liegende Stirnseite 58 ist in Richtung gegen die optische Achse 18 geneigt ausgebildet. An der Stirnseite 58 jedes Vorsprungs 56 ist eine Lichtquelle 60, vorzugsweise in Form einer LED, angebracht. Die Lichtquellen 60 dienen der Ausleuchtung des Sichtbereichs 20 und somit des Matrix-Codes 36, wenn ein Gegenstand 12 sich auf der Auflage 14 befindet.

Die Lichtquellen 60 sind zur optischen Achse 18 einander kreuzartig gegenüber liegend und zur Schnittebene II-II symmetrisch angeordnet.

Zentrisch zur optischen Achse 18 befindet sich im Innern des Gehäuses 34 weiter ein auf einem Sockel 62 angeordneter Spiegel 64. Dieser ist im vorliegenden Fall bezüglich des Bodens 38 und der optischen Achse 18 um 45° geneigt, um den Strahlengang 48 zwischen der Kamera 50 und dem Sichtbereich 20 um 90° umzulenken. Der Vollständigkeit halber sei erwähnt, dass die Kamera 50 sich etwa mittig zwischen den Rippen 46 und der Rückwand 40 befindet und auf einem Kamerasockel 66 sitzt, welcher am Boden 38 befestigt ist. In bevorzugterweise ist der Sockel 52 mit dem Spiegel 64 justierbar und der Kamerasockel 66 in Längsrichtung des Gehäuses 34 in unterschiedlichen Distanzen zum Spiegel 64 am Boden 38 befestigbar.

Weiter befindet sich im Innern des Gehäuses 34, seitlich neben der Kamera 50, eine elektronische Schaltung 68, welche einerseits mit einem externen Rechner 70 und andererseits mit der Kamera 50, den Lichtquellen 60 sowie einem Sensor 72 verbunden ist.

Bei der Kamera 50 handelt es sich in bevorzugterweise um eine Flächenkamera. Ihr Pixel-Array ist symbolisch angedeutet und mit 74 bezeichnet. Eine Flächenkamera benötigt nur eine sehr kurze Aufnahmezeit für ein Bild, weshalb es nicht notwendig ist, für eine Aufnahme den Drehteller 16 stillzuhalten. Sie betrachtet das Gesamtbild.

Der Sensor 72 ist in einer in Richtung gegen oben und in Richtung zur elektronischen Schaltung 68 hin offenen Nut 76 angeordnet. Durch diese hindurch verlaufen auch die nicht gezeigten Verbindungsleitungen zwischen Sensor 72 und elektronischer Schaltung 68.

Der Sensor 72 ist dazu bestimmt, mit Markierungen 78 am Drehteller 16, im gezeigten Ausführungsbeispiel mit sacklochartigen Ausnehmungen im Tellerring 22, zusammenzuwirken. In bevorzugter Weise handelt es sich um einen induktiven Sensor, welcher jeweils an die elektronische Schaltung 68 ein Signal abgibt, wenn eine Markierung 78 ihn erreicht bzw. sich über ihn hinwegbewegt. Eine andere Art Sensor 72, beispielsweise ein optischer, wäre auch möglich.

Weiter kann das Gehäuse 34, vorzugweise im Bereich der anderen Rippe 46, eine Sackloch-Ausnehmung aufweisen, in welcher eine federbelastete Kugel angeordnet ist, welche dazu bestimmt ist, mit einer Vertiefung am Drehteller 16 zusammenzuwirken, um diesen in einer 0-Orientierung (Drehlage) stabilisieren zu können. Diese Vertiefung befindet sich in bevorzugterweise Weise bezüglich der optischen Achse 18 relativ zu den Markierungen 78 in einer unterschiedlichen Distanz, sodass diese Vertiefung den Sensor 72 nicht beeinflusst.

Weiter ist in bevorzugter Weise der Drehteller 16 auf seiner Oberseite mit Orientierungs-Markierungen (z.B. Aufdrucke 0°, 45°, 117°, 189°, 261°, 330°) versehen, um einerseits dem Benutzer der Vorrichtung die 0-Orientierung und die Orientierungen, in welchen jeweils eine Messung durchgeführt wird, anzuzeigen. Es ist auch möglich, entsprechend den Orientierungs-Markierungen 45° ... 330°, am Drehteller 16 weitere, mit der federbelasteten Kugel zusammenwirkende Vertiefungen vorzusehen. In bevorzugter Weise befinden sich diese, in Drehrichtung des Drehtellers 16, stromaufwärts der exakten Orientierungen 45° ... 330°. Dadurch erhält der Benutzer, knapp nach dem Überfahren der Orientierungen 45° ... 330°, ein spürbares Signal, dass die betreffende Bildaufnahme-Orientierung passiert ist.

An der Rückwand 40 ist eine in vertikaler Richtung verlaufende uns somit zur optischen Achse 18 parallele Schiene 80 befestigt. Diese steht in Richtung gegen oben über das Gehäuse 34 vor und an ihr ist ein Schlitten 82 geführt. Am Schlitten 82 ist ein in Richtung zur optischen Achse 18 hin gerichteter Ausleger 84 befestigt. Im freien Endbereich des Auslegers 84 ist an diesem ein Niederhalteteller 86 um die optische Achse 18 frei drehbar gelagert. Im gezeigten Ausführungsbeispiel ist der Niederhalteteller 86 pilzförmig ausgebildet, wobei der Stamm in einem Kugellager gehalten ist, welches seinerseits in einem Niederhaltesockel 88 angeordnet ist. Dieser ist an der Unterseite des Auslegers 84 befestigt. Weiter ist der Schlitten 84 mittels einer Feststellschraube 90 in der gewünschten Position an der Schiene 80 fixierbar.

Der im vorliegenden Beispiel externe Rechner 70 arbeitet mit allgemein bekannter Software und stellt die mit der Kamera 50 aufgenommenen Bilder, sowie die mittels der Software berechneten einzelnen Verifikationen und einen Gesamtwert für die Qualität des Matrix-Codes (Overall Grade) an einem Bildschirm 92 dar. An dieser Stelle sei erwähnt, dass es selbstverständlich auch möglich ist, den Rechner 70 in die elektronische Schaltung 68 zu integrieren.

Im gezeigten Ausführungsbeispiel wird der Drehteller 60 von Hand bedient. Es ist selbstverständlich auch möglich, zum Drehen des Drehtellers 16 in die jeweils gewünschten Orientierungen einen Antrieb, in bevorzugterweise einen elektrischen Antrieb, beispielsweise einen Schrittmotor, vorzusehen.

In der 0-Orientierung des Drehtellers 16 wird ein Gegenstand 12 mit dem Matrix-Code 36 gegen unten auf die Auflagefläche 10 des Drehtellers 16 in den Sichtbereich 20 abgelegt und zur optischen Achse 18 zentrisch ausgerichtet. Dazu und zur Ausrichtung des Matrix-Codes 36 wenigstens annähernd parallel zum Pixel-Array 74 (beispielsweise auf +-5° genau) dient das am Bildschirm 92 dargestellte Live-Bild der Kamera 50. Diese Ausrichtung wird von Programmen im Rechner 70 überprüft und wenn sie sich innerhalb der zulässigen Toleranz befindet, erfolgt eine entsprechende Anzeige am Bildschirm 92. Daraufhin wird der vom Schlitten 82, Ausleger 84, Niederhalteteller 86 und Niederhaltesockel 88 gebildete Niederhalter 94, bzw. der Niederhalteteller 86 auf die obere Seite des Gegenstandes 12 abgesenkt. Der Gegenstand 12 ist somit zwischen dem Drehteller 16 und dem Niederhalter 94 gehalten.

Anschliessend wird der Drehteller 16 von Hand, oder gegebenenfalls mittels eines Antriebs, in der gewünschten Drehrichtung, üblicherweise im Gegenuhrzeigersinn, um 45° gedreht, wodurch eine erste Markierung 78 in Zusammenwirkung mit dem Sensor 72 gelangt. Das Signal des Sensors 72 führt dazu, dass ein in dieser Orientierung des Drehtellers 76 mittels der Kamera 50 aufgenommenes Bild des Matrix-Codes 36 mittels des Rechners im Hinblick auf die Qualität des Matrix-Codes 36 ausgewertet wird.

Dann wird der Drehteller im selben Drehsinn, beispielsweise um 72°, in eine nächste Mess-Orientierung gedreht, wo wiederum eine Markierung 78 in den Wirkbereich des Sensors 72 gelangt. Dadurch wird die Auswertung der entsprechenden Aufnahme des Matrix-Codes 36 ausgelöst.

Dieser Schritt wird, beispielsweise drei weitere Male, wiederholt, bis die gewünschte Anzahl Auswertungen in den gewünschten vorbestimmten Orientierungen, beispielsweise fünf, vorliegen. Sobald dies der Fall ist, erstellt der Rechner nach allgemein bekannten Kriterien einen Gesamtwert für die Qualität des Matrix-Codes 36. Die ISO/IEC 15415 Norm, beispielsweise, schreibt betreffende Mess-Orientierungen und Kriterien für die Auswertung vor.

Wenn dies beendet ist, kann der Niederhalter 94 aus seiner Halteposition angehoben und in der Freigabestellung mittels der Feststellschraube 90 an der Schiene 80 fixiert werden. Der Gegenstand 12 kann dann von der Vorrichtung entfernt werden, welche für die Überprüfung eines Codes 36 an einem nächsten Gegenstand 12 frei ist.

Der Drehteller muss bei den vorbestimmten Orientierungen für die auszuwertenden Aufnahmen nicht angehalten oder sehr genau positioniert werden. Der Sensor 72 erkennt die korrekte Orientierung und löst jeweils die Aufnahme beziehungsweise deren Auswertung aus. Bei einem motorischen Auftrieb des Drehtellers 16 bieten die mit der federbelasteten Kugel zusammenwirkenden Vertiefungen am Drehteller 16 nicht dieselben Vorteile wie in einem händischen Betrieb, weshalb dann auf die Kugel und gegebenenfalls die Vertiefungen eher verzichtet werden kann.

Die Achse der Kamera 50 rechtwinklig zur optischen Achse 18 anzuordnen, führt zu einer kleinen Baugrösse der Vorrichtung und eine Verbesserte Fremdlichtabschirmung. Selbstverständlich ist es möglich, die Kamera 50 in Richtung der optischen Achse 18 anzuordnen, was jedoch zu einer grösseren Bauhöhe der Vorrichtung führt.

An dieser Stelle sei auch erwähnt, dass das Verstellen des Schlittens 82 an der Schiene 80 auch motorisch erfolgen kann.

## Patentansprüche

1. Vorrichtung zur Prüfung der Qualität eines an einem Gegenstand angebrachten Codes, insbesondere eines 2D Matrix-Codes, mit einer eine rechtwinklig zu einer optischen Achse (18) verlaufende Auflagefläche (10) bildenden Auflage (14) für den Gegenstand (12) und einer digitalen Kamera (50), wobei der Code (36) in einer Anzahl unterschiedlichen und bestimmten Orientierungen bezüglich der optischen Achse (18) mittels der Kamera (50) aufnehmbar ist, um aus den Bilddaten mittels eines Rechners (70) einen Gesamtwert für die Qualität des Codes (36) zu ermitteln, **dadurch gekennzeichnet, dass** die Auflage (14) durch einen um die optische Achse (18) drehbaren Drehteller (16) gebildet ist, der Drehteller (16) mindestens in einem mittigen Sichtbereich (20) durchsichtig ausgebildet ist und die Kamera (50) dazu bestimmt ist, den Code (36) im Sichtbereich (20) von unten aufzunehmen.

2. Vorrichtung nach Anspruch 1, **dadurch gekennzeichnet, dass** die Kamera (50) in einem festen Abstand zur Auflagefläche (10) angeordnet ist.

3. Vorrichtung nach Anspruch 1 oder 2, **gekennzeichnet durch** einen Sensor (72) zur Bestimmung der Orientierung des Drehtellers (16).

4. Vorrichtung nach Anspruch 3, **dadurch gekennzeichnet, dass** der Sensor (72) ortsfest angeordnet ist und der Drehteller (16) mit dem Sensor (72) zusammenwirkende sowie den bestimmten Orientierungen entsprechende Markierungen (78) aufweist.

5. Vorrichtung nach einem der Ansprüche 1 bis 4, **dadurch gekennzeichnet, dass** unterhalb des Drehtellers (16) Lichtquellen (60) zur Beleuchtung des Sichtbereichs (20) angeordnet sind.

6. Vorrichtung nach einem der Ansprüche 1 bis 5, **dadurch gekennzeichnet, dass** unterhalb des Drehtellers (16) ein Spiegel (64) ortsfest angeordnet ist, welcher den optischen Strahlengang (48), vorzugsweise rechtwinklig zur optischen Achse (18), zur Kamera (50) umlenkt.

7. Vorrichtung nach einem der Ansprüche 1 bis 6, **dadurch gekennzeichnet, dass** die Kamera (50) eine Flächenkamera ist.

8. Vorrichtung nach einem der Ansprüche 1 bis 7, **gekennzeichnet durch** einen oberhalb des Drehtellers (16) angeordneten Niederhalter (94) um den Gegenstand (12) am Drehteller (16) in Anlage zu halten.

9. Vorrichtung nach Anspruch 8, **dadurch gekennzeichnet, dass** der Niederhalter (94) längs einer parallel zur optische Achse (18) verlaufenden Schiene (80) verschiebbar und vorzugsweise an dieser feststellbar ist.

10. Vorrichtung nach einem der Ansprüche 1 bis 9, **dadurch gekennzeichnet, dass** der Drehteller (16) an einem Gehäuse (34) gelagert ist sowie die Kamera (50) und gegebenenfalls die Lichtquellen (60) sowie der Spiegel (64) im Innern des Gehäuses (34) angeordnet sind.

11. Vorrichtung nach einem der Ansprüche 1 bis 10, **dadurch gekennzeichnet, dass** der Drehteller (16) einen um den Sichtbereich (20) herum verlaufenden Tellerring (22) aufweist, auf welchem eine die Auflagefläche (10) bildende Glasplatte (24) angeordnet ist.

## Claims

1. Device for testing the quality of a code applied to an object, in particular a 2D matrix code, having a support (14) for the object (12), which forms a support surface (10) running perpendicular to an optical axis (18), and a digital camera (50), it being possible to use the camera (50) to record the code (36) in a number of different and specific orientations with reference to the optical axis (18), in order to determine a total value of the quality of the code (36) from the image data by means of a computer (70), **characterized in that** the support (14) is formed by a rotary table (16) which can rotate about the optical axis (18), the rotary table (16) being of transparent design at least in a central viewing region (20), and the camera (50) being intended for recording the code (36) in the visible region (20) from below.

2. Device according to Claim 1, **characterized in that** the camera (50) is arranged at a fixed spacing from the support surface (10).

3. Device according to Claim 1 or 2, **characterized by** a sensor (72) for determining the orientation of the rotary table (16).

4. Device according to Claim 3, **characterized in that** the sensor (72) is arranged in a stationary fashion, and the rotary table (16) has markings (78) which cooperate with the sensor (72) and correspond to the specific orientations.

5. Device according to one of Claims 1 to 4, **characterized in that** light sources (60) for illuminating the viewing region (20) are arranged below the rotary table (16).

6. Device according to one of Claims 1 to 5, **characterized in that** arranged below the rotary table (16) in a stationary fashion is a mirror (64) which reflects the optical beam path (48) to the camera (50), preferably in a fashion perpendicular to the optical axis (18).

7. Device according to one of Claims 1 to 6, **characterized in that** the camera (50) is an area camera.

8. Device according to one of Claims 1 to 7, **characterized by** a retainer (94), arranged above the rotary table (16), for holding the object (12) in contact with the rotary table (16).

9. Device according to Claim 8, **characterized in that** the retainer (94) can be displaced along a rail (80), running parallel to the optical axis (18), and can preferably be fixed on said rail.

10. Device according to one of Claims 1 to 9, **characterized in that** the rotary table (16) is mounted on a housing (34), and the camera (50) and, if appropriate, the light sources (60) as well as the mirrors (64) are arranged in the interior of the housing (34).

11. Device according to one of Claims 1 to 10, **characterized in that** the rotary table (16) has a table ring (22), which runs around the visible region (20) on which a glass plate (24) forming the support surface (10) is arranged.

## Revendications

1. Dispositif de vérification de la qualité d'un code apporté sur un objet, en particulier d'un code en matrice bidimensionnelle, le dispositif présentant un appui (14) qui forme pour l'objet (12) une surface de pose (10) qui s'étend perpendiculairement à un axe optique (18) ainsi qu'une caméra (50), le code (36) pouvant être enregistré par la caméra (50) dans un certain nombre d'orientations différentes et définies par rapport à l'axe optique (18) pour déterminer au moyen d'un calculateur (70) une valeur globale de la qualité du code (36) à partir des données d'image, **caractérisé en ce que**
l'appui (14) est formé par un plateau rotatif (16) apte à tourner autour de l'axe optique (18),
**en ce qu'**au moins une partie centrale (20) de vision du plateau rotatif (16) est transparente et
**en ce que** la caméra (50) est destinée à enregistrer le code (36) par le bas à travers la partie de vision (20).

2. Dispositif selon la revendication 1, **caractérisé en ce que** la caméra (50) est disposée à distance fixe de la surface de pose (10).

3. Dispositif selon les revendications 1 ou 2, **caractérisé par** un détecteur (72) qui détermine l'orientation du plateau rotatif (16).

4. Dispositif selon la revendication 3, **caractérisé en ce que** le détecteur (72) est disposé fixement et **en ce que** le plateau rotatif (16) présente des repères (78) qui coopèrent avec le détecteur (72) et qui correspondent aux orientations définies.

5. Dispositif selon l'une des revendications 1 à 4, **caractérisé en ce que** des sources de lumière (60) sont prévues en dessous du plateau rotatif (16) pour éclairer la partie de vision (20).

6. Dispositif selon l'une des revendications 1 à 5, **caractérisé en ce qu'**un miroir (64) est disposé fixement en dessous du plateau rotatif (16) qui dévie le parcours (48) du rayon optique vers la caméra (50), de préférence perpendiculairement à l'axe optique (18).

7. Dispositif selon l'une des revendications 1 à 6, **caractérisé en ce que** la caméra (50) est une caméra plate.

8. Dispositif selon l'une des revendications 1 à 7, **caractérisé par** un support (94) disposé en dessous du plateau rotatif (16) pour maintenir l'objet (12) posé sur le plateau rotatif (16).

9. Dispositif selon la revendication 8, **caractérisé en ce que** le support (94) peut coulisser le long d'un rail (80) qui s'étend en parallèle à l'axe optique (18) et qui peut de préférence être immobilisé sur le rail.

10. Dispositif selon l'une des revendications 1 à 9, **caractérisé en ce que** le plateau rotatif (16) est monté à rotation sur un boîtier (34) et **en ce que** la caméra (50) et éventuellement les sources de lumière (60) ainsi que le miroir (64) sont disposés à l'intérieur du boîtier (34).

11. Dispositif selon l'une des revendications 1 à 10, **caractérisé en ce que** le plateau rotatif (16) présente un anneau (22) de plateau qui entoure la partie de vision (20) et sur lequel est disposée une plaque de verre (24) qui forme la surface de pose (10).
